(19) Europäisches Patentamt
European Patent Office
Office européen des brevets

(11) **EP 3 754 431 B1**

(12) **FASCICULE DE BREVET EUROPEEN**

(45) Date de publication et mention de la délivrance du brevet:
**19.04.2023 Bulletin 2023/16**

(21) Numéro de dépôt: **20180644.5**

(22) Date de dépôt: **17.06.2020**

(51) Classification Internationale des Brevets (IPC):
**G03H 1/08** *(2006.01)*  **G03H 1/04** *(2006.01)*
**G01N 15/14** *(2006.01)*  **G06N 3/04** *(2023.01)*
**G06N 3/08** *(2023.01)*

(52) Classification Coopérative des Brevets (CPC):
**G03H 1/0866; G01N 15/1468; G03H 1/0443;**
**G06N 3/045; G06N 3/08;** G01N 2015/1454;
G03H 2001/0447; G03H 2001/0816;
G03H 2001/0875; G06N 20/10

(54) **PROCÉDÉ DE RECONSTRUCTION HOLOGRAPHIQUE**

HOLOGRAFISCHES REKONSTRUKTIONSVERFAHREN

METHOD FOR HOLOGRAPHIC RECONSTRUCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2019 FR 1906766**

(43) Date de publication de la demande:
**23.12.2020 Bulletin 2020/52**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **HERVE, Lionel**
**38054 GRENOBLE cedex 09 (FR)**
• **ALLIER, Cédric**
**38054 GRENOBLE cedex 09 (FR)**

(74) Mandataire: **Le Goaller, Christophe**
**Innovation Competence Group**
**310 avenue Berthelot**
**69372 Lyon Cedex 08 (FR)**

(56) Documents cités:
**WO-A1-2018/060589**

• **TOMOYOSHI SHIMOBABA ET AL: "Convolutional neural network-based regression for depth prediction in digital holography", ARXIV.ORG, CORNELL UNIVERSITY LIBRARY, 201 OLIN LIBRARY CORNELL UNIVERSITY ITHACA, NY 14853, 2 février 2018 (2018-02-02), XP081214341,**
• **AARON YEVICK ET AL: "Machine-learning approach to holographic particle characterization", OPTICS EXPRESS, vol. 22, no. 22, 22 octobre 2014 (2014-10-22), page 26884, XP055298737, US ISSN: 2161-2072, DOI: 10.1364/OE.22.026884**
• **YICHEN WU ET AL: "Extended depth-of-field in holographic image reconstruction using deep learning based auto-focusing and phase-recovery", ARXIV.ORG, CORNELL UNIVERSITY LIBRARY, 201 OLIN LIBRARY CORNELL UNIVERSITY ITHACA, NY 14853, 21 mars 2018 (2018-03-21), XP081224518, DOI: 10.1364/OPTICA.5.000704**

## Description

### DOMAINE TECHNIQUE

Le domaine technique de l'invention est la reconstruction d'images holographiques, en particulier pour caractériser un échantillon, par exemple un échantillon biologique.

### ART ANTERIEUR

L'observation d'échantillons, et en particulier des échantillons biologiques, par imagerie sans lentille connaît un développement important depuis ces dix dernières années. Cette technique permet d'observer un échantillon en le disposant entre une source de lumière et un capteur d'image, sans disposer de lentille de grossissement optique entre l'échantillon et le capteur d'image. Ainsi, le capteur d'image collecte une image de l'onde lumineuse transmise par l'échantillon.

Cette image est formée de figures d'interférence entre l'onde lumineuse émise par la source de lumière et transmise par l'échantillon, et des ondes de diffraction, résultant de la diffraction par l'échantillon de l'onde lumineuse émise par la source de lumière. Ces figures d'interférences sont parfois dénommées figures de diffraction, ou désignées par le terme anglais « diffraction pattern ».

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, son champ d'observation est nettement plus important que ne peut l'être celui d'un microscope. On comprend alors que les perspectives d'application liées à cette technologie sont importantes.

Afin d'obtenir une observation satisfaisante de l'échantillon, des algorithmes itératifs de reconstruction d'image ont été développés, tels que ceux décrits dans WO2016189257 ou dans WO2017162985. Ces algorithmes comportent une application itérative d'un opérateur de propagation holographique, de façon à propager l'hologramme, formé dans le plan de détection, dans un plan de reconstruction, ce dernier correspondant généralement un plan de l'échantillon, selon lequel s'étend l'échantillon. Le plan de l'échantillon est généralement parallèle au plan de détection. Les algorithmes décrits dans l'art antérieur comportent des successions de propagation / rétropropagation, d'images entre le plan de détection et le plan de l'échantillon. En effet, l'image acquise par le capteur d'image ne comporte pas d'information relative à la phase de l'onde lumineuse d'exposition. L'objectif de ces algorithmes est d'estimer, de façon itérative, la phase de l'onde lumineuse d'exposition dans le plan de détection. Cela permet de former une image correcte de l'échantillon, dans le plan de reconstruction. Ainsi, ces algorithmes permettent d'obtenir des propriétés optiques de l'onde lumineuse d'exposition. Il peut s'agir par exemple du module ou de la phase. WO 2018/060589 A1 divulgue également un procédé d'observation d'un échantillon.

Les documents suivants divulguent des algorithmes d'intelligence artificielle à apprentissage supervisé: "Convolutional neural network-based régression for depth prédiction in digital holography" (Tomoyoshi Shimobaba et al. - Cornell University Library - 2018/02/02), "Machine-learning approach to holographie particle characterization" (Aaron Yevick et al. - Optics Express, vol.22, no.22, p.26884) and "Extended depth-of-field in holographie image reconstruction using deep learning based auto-focusing and phase-recovery" (Yichen Wu et al. - Cornell University Library - 2018/03/21).

Les inventeurs proposent un procédé d'observation d'un échantillon par une méthode d'imagerie holographique, le procédé comprenant une étape de reconstruction d'une image complexe de l'échantillon, sur la base de laquelle on peut obtenir une représentation spatiale de paramètres de l'échantillon.

### EXPOSE DE L'INVENTION

Un premier objet de l'invention est un procédé d'observation d'un échantillon tel que selon la revendication indépendante 1. Un autre objet de l'invention concerne un dispositif d'observation d'un échantillon tel que selon la revendication indépendante 13. D'autres aspects de l'invention sont présentés dans les revendications dépendantes.

L'invention sera mieux comprise à la lecture de l'exposé des exemples de réalisation présentés, dans la suite de la description, en lien avec les figures listées ci-dessous.

### FIGURES

La figure 1A représente un dispositif permettant une mise en oeuvre de l'invention, selon une configuration en imagerie sans lentille.

La figure 1B représente un dispositif permettant une mise en oeuvre de l'invention, selon une configuration défocalisée.

La figure 2 montre l'évolution d'une onde lumineuse et illustre le retard induit par une différence de trajet optique dans l'échantillon. Le retard génère un déphasage de l'onde lumineuse se propageant entre un échantillon et le capteur d'image.

La figure 3A représente les principales étapes d'un mode de réalisation de l'invention.

La figure 3B illustre une indétermination d'une propriété optique de l'échantillon.

La figure 3C schématise un réseau de neurones convolutif mis en oeuvre dans l'invention.

Les figures 4A à 4G représentent des images illustrant la phase d'apprentissage du réseau de neurones à l'aide d'un échantillon modélisé.

Les figures 5A à 5F montrent un exemple d'application de l'invention sur un échantillon comportant des cellules flottantes.

Les figures 6A à 6D montrent un autre exemple d'application de l'invention sur un échantillon comportant des cellules flottantes

Les figures 7A à 7C montrent un exemple d'application de l'invention sur un échantillon comportant des cellules adhérentes.

## EXPOSE DE MODES DE REALISATION PARTICULIERS

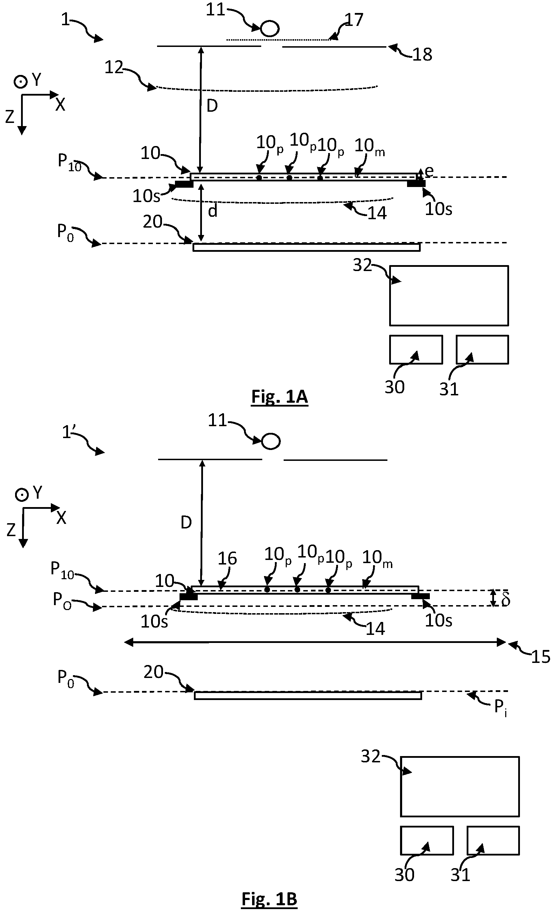

La figure 1A représente un exemple de dispositif 1 selon l'invention. Une source de lumière 11 est apte à émettre une onde lumineuse 12, dite onde lumineuse incidente, se propageant en direction d'un échantillon 10, selon un axe de propagation Z. L'onde lumineuse est émise selon une bande spectrale $\Delta\lambda$, comportant une longueur d'onde $\lambda$. La longueur d'onde $\lambda$ peut être une longueur d'onde centrale de ladite bande spectrale.

L'échantillon 10 est un échantillon que l'on souhaite caractériser. Il peut notamment s'agir d'un milieu $10_m$ comportant des particules $10_p$. Les particules $10_p$ peuvent être des particules sanguines, par exemple des globules rouges. Il peut également s'agir de cellules, de microorganismes, par exemple des bactéries ou des levures, des microalgues, des microbilles, ou des gouttelettes insolubles dans le milieu liquide, par exemple des nanoparticules lipidiques. De préférence, les particules $10_p$ ont un diamètre, ou sont inscrites dans un diamètre, inférieur à 1 mm, et de préférence inférieur à 100 $\mu$m. Il s'agit de microparticules (diamètre inférieur à 1 mm) ou de nanoparticules (diamètre inférieur à 1 $\mu$m). Le milieu $10_m$, dans lequel baignent les particules, peut être un milieu liquide, par exemple une phase liquide d'un liquide corporel, d'un milieu de culture ou d'un liquide prélevé dans l'environnement ou dans un procédé industriel. Il peut également s'agir d'un milieu solide ou ayant la consistance d'un gel, par exemple un substrat de type gélose, propice à la croissance de colonies bactériennes.

L'échantillon peut également être un échantillon solide, par exemple une fine lame de tissu biologique, de type lame d'anatomopathologie, ou un extrait sec d'un fluide, par exemple d'un fluide biologique.

L'échantillon est de préférence transparent ou suffisamment translucide pour pouvoir permettre la formation d'une image par le capteur d'image.

L'échantillon 10 peut être contenu dans une chambre fluidique 16, par exemple une micro-cuvette, d'utilisation courante dans les dispositifs de type point of care, dans laquelle l'échantillon 10 pénètre, par exemple par capillarité. L'épaisseur e de l'échantillon 10, selon l'axe de propagation varie typiquement entre 20 $\mu$m et 1 cm, et est de préférence comprise entre 50 $\mu$m et 500 $\mu$m, par exemple 150 $\mu$m.

L'échantillon s'étend selon un plan $P_{10}$, dit plan de l'échantillon, perpendiculaire à l'axe de propagation. Il est maintenu sur un support 10s. Le plan de l'échantillon est repéré par deux axes orthogonaux X et Y, définissant respectivement des coordonnées $x$ et $y$. Chaque couple de coordonnée ($x, y$) correspond à une position radiale r. Les positions radiales sont définies dans le plan de l'échantillon et dans un plan de détection décrit ci-après.

La distance D entre la source de lumière 11 et l'échantillon 10 est de préférence supérieure à 1 cm. Elle est de préférence comprise entre 2 et 30 cm. De préférence, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Ainsi, de préférence, la lumière parvient à l'échantillon sous la forme d'ondes planes, ou pouvant être considérées comme telles.

La source de lumière 11 peut être une diode électroluminescente ou une diode laser. Elle peut être associée à diaphragme 18, ou filtre spatial. L'ouverture du diaphragme est typiquement comprise entre 5 $\mu$m et 1 mm, de préférence entre 10 $\mu$m et 200 $\mu$m ou 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée face à l'échantillon 10.

Le dispositif peut comporter un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par la source de lumière élémentaire 11 selon un cône d'angle $\alpha$, $\alpha$ étant égal à 30° dans le cas présent. De préférence, l'angle de diffusion $\alpha$ varie entre 10° et 80°.

De préférence, la bande spectrale d'émission $\Delta\lambda$, de l'onde lumineuse incidente 12 a une largeur inférieure à 100 nm. Par largeur de bande spectrale, on entend une largeur à mi-hauteur de ladite bande spectrale. Dans la suite du texte, la bande spectrale est désignée par une longueur d'onde $\lambda$ représentative de la bande spectrale, et correspondant par exemple à la longueur d'onde centrale.

L'échantillon 10 est disposé entre la source de lumière 11 et un capteur d'image 20. Le capteur d'image 20 définit un plan de détection $P_0$. Ce dernier s'étend de préférence parallèlement, ou sensiblement parallèlement au plan $P_{10}$ selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 20 est apte à former une image selon le plan de détection $P_0$. Dans l'exemple représenté, il s'agit d'un capteur d'image comportant une matrice de pixels, de type CCD ou un CMOS. Les CMOS sont les capteurs préférés car la taille des pixels est plus faible, ce qui permet d'acquérir des images dont la résolution spatiale est plus favorable. Le plan de détection $P_0$ s'étend de préférence perpendiculairement à l'axe de propagation Z de l'onde lumineuse incidente 12. Ainsi, le plan de détection $P_0$ est parallèle au plan de l'échantillon $P_{10}$. Le capteur d'image comporte des pixels, à chaque pixel étant associée une position radiale r, dans le plan de détection $P_0$.

La distance *d* entre l'échantillon 10 et la matrice de pixels du capteur d'image 20 est préférentiellement comprise entre 50 $\mu$m et 2 cm, de préférence comprise entre 100 $\mu$m et 2 mm.

Sur le dispositif représenté sur la figure 1A, on remarque l'absence d'optique de grossissement ou de formation d'image entre le capteur d'image 20 et l'échantillon 10. Cela n'empêche pas la présence éventuelle de microlentilles de focalisation au niveau de chaque pixel du capteur d'image 20, ces dernières n'ayant pas de fonction de grandissement de l'image acquise par le capteur d'image.

Sous l'effet de l'onde lumineuse incidente 12, l'échantillon 10 peut engendrer une onde diffractée, susceptible de produire, au niveau du plan de détection $P_0$, des interférences, en particulier avec une partie de l'onde lumineuse incidente 12 transmise par l'échantillon. Par ailleurs, l'échantillon peut absorber une partie de l'onde lumineuse incidente 12. Ainsi, l'onde lumineuse 14, transmise par l'échantillon, et à laquelle est exposé le capteur d'image 20, comporte est formée suite à l'absorption et la diffraction de l'onde lumineuse incidente 12 par l'échantillon. Ainsi, l'échantillon entraîne une absorption d'une partie de l'onde lumineuse incidente, ainsi qu'un déphasage de cette dernière. Le déphasage est dû à une variation d'indice de réfraction (ou indice optique) lorsque la lumière se propage à travers l'échantillon.

L'onde lumineuse 14 peut également être désignée par le terme onde lumineuse d'exposition. Un processeur 30, par exemple un microprocesseur, est apte à traiter chaque image acquise par le capteur d'image 20. En particulier, le processeur est un microprocesseur relié à une mémoire programmable 31 dans laquelle est stockée une séquence d'instructions pour effectuer les opérations de traitement d'images et de calculs décrites dans cette description. Le processeur peut être couplé à un écran 32 permettant l'affichage d'images acquises par le capteur d'image 20 ou calculées par le processeur 30.

L'image acquise par le capteur d'image forme un hologramme. Elle ne permet généralement pas une représentation visuelle satisfaisante de l'échantillon, en particulier lorsque l'échantillon comporte des éléments diffractants rapprochés les uns des autres. C'est notamment le cas lorsque l'échantillon comporte des particules rapprochées les unes des autres, ou lorsque l'échantillon est une fine lame de tissu biologique.

La figure 1B schématise un autre dispositif 1' permettant une mise en oeuvre de l'invention. Contrairement au dispositif représenté sur la figure 1A, le dispositif de la figure 1B comporte un système optique 15 de formation d'image. Le système optique 15 définit un plan image $P_i$ et un plan objet $P_0$. Le système optique peut être une lentille ou un objectif. Lors de l'acquisition de l'image de l'échantillon, le capteur d'image est disposé selon une configuration défocalisée. Le plan de détection est décalé par rapport au plan image et/ou le plan selon lequel s'étend l'échantillon est décalé par rapport au plan objet. Le décalage $\delta$ est généralement faible, en étant de préférence inférieur à 1 mm, et typiquement dans une plage 50 $\mu$m - 500 $\mu$m.

Quel que soit le dispositif utilisé, l'échantillon peut être décrit par des paramètres. A chaque position radiale correspond un ou plusieurs paramètres. Les paramètres correspondant à une même position peuvent former un vecteur $F(r)$, chaque vecteur étant défini à une position radiale r dans le plan de l'échantillon. Chaque terme de chaque vecteur correspond à une propriété optique de l'échantillon. Chaque position radiale correspond à un ou plusieurs pixels du capteur d'image.

Chaque vecteur de paramètres $F(r)$ est de dimension *W*. *W* est un entier strictement positif. *W* correspond au nombre de paramètres considérés à chaque position radiale. Chaque vecteur $F(r)$ comporte *W* termes $F_w(r)$, de telle sorte que :

$$F(r) = \begin{bmatrix} F_1(r) \\ F_w(r) \\ F_W(r) \end{bmatrix}$$

L'ensemble des vecteurs $F(r)$, pour les différentes positions radiales considérées, forme un jeu de paramètres $\mathcal{F}$ rassemblant les paramètres de l'échantillon.

On se base sur l'exemple décrit dans la demande FR1859618, dans lequel l'échantillon peut être décrit par une absorbance $\alpha(r)$ (premier terme du vecteur) ainsi qu'une différence de trajet optique $L(r)$ (deuxième terme du vecteur), ces propriétés étant susceptibles de varier en fonction de la bande spectrale d'illumination. Ainsi, chaque position radiale r, l'échantillon peut être décrit par W = 2 paramètres différents :

$$F_{w=1}(r) = F_1(r) = \alpha(r)$$

et

$$F_{w=2}(r) = F_2(r) = L(r).$$

L'absorbance $\alpha(r)$ correspond à une capacité de l'échantillon à absorber tout ou partie de l'onde lumineuse d'illumination. Lorsqu'une particule est considérée comme transparente, $\alpha(r) = 0$.

Dans d'autres modélisations, les paramètres peuvent être l'indice optique, c'est-à-dire l'indice de réfraction, de l'échantillon, sachant qu'il peut s'agir d'une grandeur complexe. Ainsi, les paramètres peuvent comprendre la partie réelle de l'indice optique, et/ou la partie imaginaire de l'indice optique.

La différence de trajet optique $L(r)$ dépend de l'épaisseur $e(r)$ de l'échantillon, parallèlement à l'axe de propagation de la lumière, ainsi que de la différence d'indice induite par l'échantillon. Par exemple, lorsque l'échantillon comporte des particules $10_p$ baignant dans un milieu $10_m$, chaque particule 10p induit une différence de trajet optique L(r) telle que :

$$L(r) = (n_p - n_m) \times e(r)$$

où $e(r)$ est l'épaisseur de la particule à la position radiale r ;

et $n_p$ et $n_m$ correspondent respectivement aux indices de réfraction de la particule $10_p$ et du milieu $10_m$.

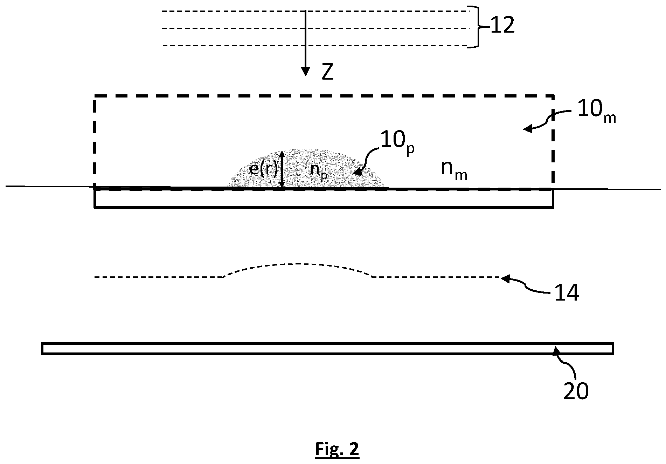

Sur la figure 2, on a représenté, par des pointillés, le front d'onde de l'onde lumineuse 12, incidente à l'échantillon, ainsi que de l'onde lumineuse d'exposition 14, à laquelle est exposé le capteur d'image 20, l'onde lumineuse d'exposition se propageant de l'échantillon vers le capteur d'image. Dans cet exemple, $n_p > n_m$. Le front d'onde est plan avant d'atteindre l'échantillon. En aval de l'échantillon, le front d'onde est déformé du fait de l'apparition de différences de chemin optique induites par la particule.

Soit $A_{10}$, l'image de l'amplitude complexe de l'onde lumineuse d'exposition 14 dans le plan de l'échantillon $P_{10}$. Cette image, qui est une image complexe, peut également être considérée comme une image complexe de l'échantillon. A chaque position radiale $r$, l'amplitude complexe $A_{10}(r)$ peut être définie à partir du vecteur de paramètres $F(r)$ correspondant à la position radiale r. Lorsque le vecteur de paramètres $F(r)$ comporte les termes $\alpha(r)$ et $L(r)$, l'amplitude complexe $A_{10}(r)$ peut être exprimée selon l'expression suivante :

$$A_{10}(r) = b(r) exp(2i\pi \frac{L(r)}{\lambda} + \alpha(r)) \quad (1)$$

Le terme $b(r)$ est une amplitude représentative de l'onde lumineuse incidente 12 atteignant l'échantillon. Cette amplitude peut être mesurée par le capteur d'image 20 en l'absence d'échantillon 10 sur le support 10s. La source de lumière 11 éclaire alors directement le capteur d'image. A partir de l'image $I_{0,b}(r)$ acquise par le capteur d'image 20 dans la bande spectrale d'émission

$\Delta\lambda$, on obtient par exemple l'amplitude $b(r)$ selon l'expression :

$$b(r) = \sqrt{I_{0,b}(r)} . (1')$$

L'expression (1) permet de déterminer une expression d'une image complexe à partir des vecteurs de paramètres déterminés dans les différentes positions radiales.

Le terme $2i\pi\frac{L(r)}{\lambda}$ détermine la phase de l'amplitude complexe $A_{10}(r)$. Il apparaît que ce terme est $\lambda$ périodique. Cela signifie que différentes particules dont la différence de trajet optique est égale à $L(r)$ + q$\lambda$, q étant un entier, permettent d'obtention d'une même amplitude complexe $A_{10}(r)$ entre l'échantillon et le capteur d'image. Autrement dit, il existe potentiellement une infinité d'objets susceptibles de générer une même amplitude complexe entre l'échantillon et le capteur d'image.

Un des objectifs des algorithmes de reconstruction holographique est de reconstruire les propriétés optiques d'un objet à partir d'une image acquise par un capteur d'image, formant un hologramme. Or, l'hologramme ne comporte qu'une information partielle relative à l'onde lumineuse d'exposition, à laquelle est exposé le capteur d'image. En particulier, l'image acquise par le capteur d'image, c'est-à-dire l'hologramme, ne comporte pas d'information relative à la phase de l'onde lumineuse d'exposition. La mise en oeuvre d'algorithmes de reconstruction holographique itératifs permet d'estimer, de façon itérative, une information relative à la phase de l'onde lumineuse d'exposition, qui correspond au déphasage de l'onde lumineuse incidente induit par l'objet. Lorsque l'onde lumineuse d'exposition est exprimée selon l'expression (1), le terme relatif à la phase correspond au terme $2i\pi\frac{L(r)}{\lambda}$. Un problème de l'estimation d'un terme de phase à l'aide des algorithmes actuels, usuellement désigné par le terme "phase unwrapping", est d'identifier la valeur correcte du terme de phase parmi les infinités de valeurs, $\lambda$ périodiques, qui résultent en une même expression de l'amplitude complexe de l'onde lumineuse d'exposition.

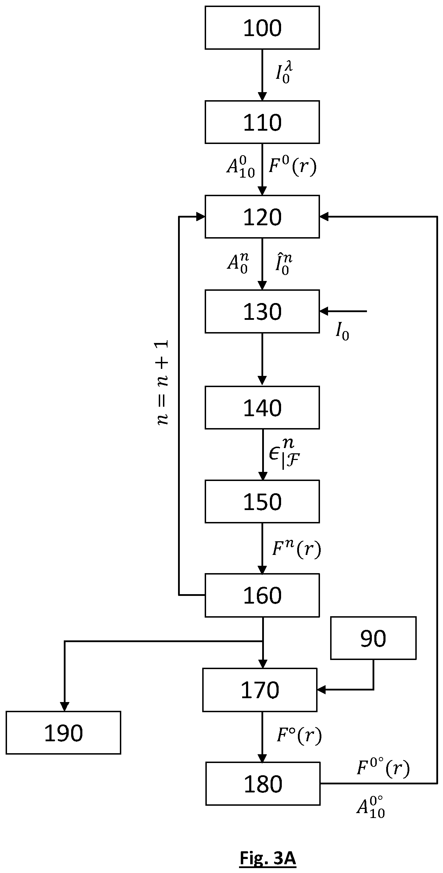

Le procédé décrit ci-dessous, dont les principales étapes sont décrites sur la figure 3A, permet d'adresser cette question.

Etape 100 : Illumination de l'échantillon et acquisition d'une image $I_0$ dans chaque bande spectrale d'illumination $\Delta\lambda$.

Etape 110 : Initialisation. Au cours de cette étape, on prend en compte une image complexe d'initialisation $A_{10}^0$ , dans le plan de l'échantillon $P_{10}$. L'indice 10 du symbole $A_{10}^0$ désigne le fait que l'image est acquise dans le plan de l'échantillon $P_{10}$. L'exposant 0 du symbole $A_{10}^0$ désigne le fait qu'il s'agit d'une image d'initialisation.

En considérant une onde lumineuse d'exposition telle que définie par l'expression (1), l'initialisation revient à considérer, pour chaque position radiale $r$, des paramètres de l'échantillon formant un vecteur initial de paramètres, tel que :

$$F^0(r) = \begin{bmatrix} \alpha^0(r) \\ L^0(r) \end{bmatrix}$$

Les termes composant le vecteur initial peuvent être définis de façon arbitraire, ou en fonction d'un a priori sur l'échantillon. Par exemple, on peut attribuer à chaque terme une même valeur, par exemple une valeur nulle. Les vecteurs de paramètres $F^0(r)$ définis lors de cette étape forment un ensemble d'initialisation $\mathcal{F}^0$ décrivant l'échantillon 10. Ils forment également une image complexe initiale $A_{10}(r)$ dans le plan de l'échantillon $P_{10}$.

Les étapes 120 à 160 décrites ci-après sont mises en oeuvre de façon itérative, selon un rang d'itération $n$. $n$ est un entier compris entre 1 (première itération) et $N$, $N$ correspondant au nombre d'itérations. Au cours de l'étape 110, $n = 0$. Dans les notations utilisées, le rang d'itération est présenté sous la forme d'un exposant.

A chaque itération est associé un ensemble $\mathcal{F}^n$ de vecteurs de paramètres $F^n(r)$. Chaque vecteur de paramètres $F^n(r)$, associé à une position radiale $r$, est, tel que :

$$F^n(r) = \begin{bmatrix} \alpha^n(r) \\ L^n(r) \end{bmatrix}$$

Chaque itération revient à mettre à jour les vecteurs de paramètres $F^n(r)$, c'est-à-dire les termes $\alpha^n(r)$ et $L^n(r)$, et cela pour les différentes positions radiales $r$ considérées.

Etape 120 : Estimation d'une image dans le plan de détection.

Pour chaque position radiale $r$, à partir des paramètres $F^{n-1}(r)$ résultant de l'étape 110, ou de l'étape 150 d'une itération précédente, détermination d'une amplitude complexe $A_{10}^{n-1}(r)$ de l'onde lumineuse d'exposition 14, dans le plan de l'échantillon $P_{10}$. Lors de la première itération, $n = 1$. Dans cet exemple, l'amplitude complexe est déterminée à partir de l'expression (1), à partir de l'ensemble initial de vecteurs de paramètres $\mathcal{F}^0$ ou de l'ensemble de vecteurs de paramètres $\mathcal{F}^{n-1}$ résultant d'une itération précédente. Les amplitudes complexes $A_{10}^{n-1}(r)$ définies pour les différentes positions radiales $r$ considérées forment une image complexe $A_{10}^{n-1}$ de l'onde lumineuse d'exposition 14, dans le plan de l'échantillon $P_{10}$. L'image complexe $A_{10}^{n-1}$ est également appelée image complexe de l'échantillon.

Ainsi, l'image complexe $A_{10}^{n-1}$ prise en compte dans l'étape 120 est élaborée à partir d'un jeu de paramètres $\mathcal{F}^{n-1}$ initial (lorsque n = 1) ou résultant d'une itération précédente des étapes 120 à 150).

A partir de l'image complexe $A_{10}^{n-1}$, on applique un opérateur de propagation holographique $h_{P_{10} \to P_0}$, de façon à obtenir une image complexe $A_0^n$ de l'onde lumineuse d'exposition 14, dans le plan de détection, selon l'expression :

$$A_0^n = A_{10}^{n-1} * h_{P_{10} \to P_0} \quad (2)$$

$h_{P10 \to P0}$ est un opérateur de propagation holographique, permettant une propagation du plan de l'échantillon $P_{10}$ vers le plan de détection $P_0$. Cet opérateur dépend de la longueur d'onde $\lambda$. Il peut s'agir d'un opérateur de Fresnel, par exemple

$$h(x, y, z) = \frac{1}{i\lambda z} e^{j2\pi \frac{z}{\lambda}} \exp\left( i\pi \frac{x^2 + y^2}{\lambda z} \right) \quad (3)$$

avec

$$r = (x, y)$$

D'une façon générale, l'opérateur de propagation holographique $h_{P10 \to P0}$ modélise un transport de l'onde lumineuse d'exposition 14 entre au moins deux points distants l'un de l'autre. Dans l'application décrite, le produit de convolution décrit en lien avec l'équation (2) modélise un transport de l'onde lumineuse d'exposition 14 entre le plan de l'échantillon $P_{10}$ et le plan de détection $P_0$.

En considérant le carré du module de l'onde lumineuse d'exposition 14, on obtient une estimation $\hat{I}_0^n$, de l'image $I_0$ acquise par le capteur d'image. Ainsi,

$$\hat{I}_0^n = A_0^n A_0^{n*} \quad (4)$$

$A_0^{n*}$ est l'image complexe conjuguée de l'image complexe $A_0^n$ .

L'expression (4) revient à adopter un modèle de mesure simple, dans laquelle l'intensité de l'estimation de l'image acquise par le capteur correspond au carré du module de l'image complexe $A_0^n$ .

Selon une alternative, il est possible de prendre en compte la cohérence spatiale de la source de lumière, en considérant un noyau de convolution K, ainsi que des inhomogénéités d'éclairage, de telle sorte que :

$$\hat{I}_0^n = B\left[(A_0^n A_0^{n*}) * K\right] (4')$$

Le noyau de convolution K traduit une surface de la source de lumière parallèlement au plan de détection.

*B* peut être obtenu par calibration, par exemple par une acquisition en l'absence d'objet entre la source et le capteur d'image.

D'une façon générale, au cours de cette étape, l'estimation $\hat{I}_0^n$ peut être décrite selon l'expression :

$$\hat{I}_0^n = m(A_{10}^{n-1})(5).$$

où $A_{10}^{n-1}$ correspond à l'image complexe de l'onde lumineuse d'exposition 14 dans le plan de l'échantillon, initiale (lorsque *n* = 1) ou résultant d'une itération précédente (lorsque *n* > 1), et m est une fonction prenant en compte l'expression (4) (ou (4')) ainsi que l'expression (2).

L'image complexe de l'onde lumineuse d'exposition $A_{10}^{n-1}$ dépend des paramètres contenus dans les vecteurs $F^{n-1}(r)$ décrivant l'échantillon, en l'occurrence l'absorbance $\alpha^{n-1}(r)$ et la différence de chemin optique $L^{n-1}(r)$, selon l'expression (1).

Ainsi, on peut écrire :

$$\hat{I}_0^n = m'(\alpha^{n-1}, L^{n-1})(5)'$$

où $\alpha^{n-1}$ et $L^{n-1}$ sont respectivement des images de l'absorbance et de la différence de chemin optique résultant de l'initialisation ou d'une itération précédente, *m'* est une fonction prenant en compte les expressions (1), (2) ainsi que (4) ou (4').

Etape 130 : comparaison de l'image $\hat{I}_0^n$ estimée lors de l'étape 120 avec l'image $I_0$ acquise par le capteur d'image 20 lors de l'étape 100. La comparaison peut être exprimée sous forme d'une différence ou d'un ratio, ou d'un écart quadratique.

Etape 140 : Calcul d'un indicateur de validité à partir de la comparaison effectuée, lors de l'étape 130, dans chaque bande spectrale. L'indicateur de validité $\epsilon_{|\mathcal{F}^n}^n$ représente la pertinence de l'ensemble $\mathcal{F}^n$ des vecteurs $F^n(r)$ décrivant l'échantillon. L'indice $|\mathcal{F}^n$ signifie que l'indicateur de validité est établi sachant l'ensemble $\mathcal{F}^n$ des vecteurs $F^n(r)$. Dans cet exemple, l'indicateur de validité est d'autant plus faible que l'échantillon est correctement décrit par l'ensemble $\mathcal{F}$.

L'indicateur de validité $\epsilon_{|\mathcal{F}^n}^n$ comporte un critère d'erreur $\epsilon_{0|\mathcal{F}^n}^n$ , ce dernier quantifiant une erreur globale de l'image estimée $\hat{I}_0^n$ par rapport à l'image mesurée $I_0$. Par erreur globale, on entend une erreur pour chaque position radiale.

Le critère d'erreur $\epsilon_{0|\mathcal{F}^n}^n$ est établi à partir de la comparaison des images $\hat{I}_0^n$ et $I_0$. Par exemple,

$$\epsilon_{0|\mathcal{F}^n}^n = \frac{1}{N_r} \int dr \sum_\lambda \left(\frac{I_0(r) - \hat{I}_0^n(r)}{\sigma(\hat{I}_0^n(r))}\right)^2 \quad (10)$$

où :

-   $N_r$ est le nombre de positions radiales considérées ;
-   $\sigma$ est l'opérateur écart-type, moyennant une prise en compte d'un modèle de bruit.

L'indice $0|\mathcal{F}^n$ attribué au critère d'erreur $\epsilon_{0|\mathcal{F}^n}^n$ représente le fait que cet indicateur est calculé dans le plan de détection $P_0$, sachant l'ensemble des vecteurs $\mathcal{F}^n$ pris en compte lors de l'itération.

Le critère d'erreur $\epsilon_{0|\mathcal{F}^n}^n$ est un critère d'attache aux données, dans le sens ou sa minimisation permet de se rapprocher des données mesurées, en l'occurrence de l'image $I_0$. Aussi, lorsque $\hat{I}_0^n$ tend vers $I_0$, c'est-à-dire lorsque l'ensemble $\mathcal{F}^n$ des vecteurs décrivent correctement l'échantillon 10, $\epsilon_{0|\mathcal{F}^n}^n$ tend vers 1. Au cours de l'étape 150, on peut appliquer un algorithme de minimisation, de type descente de gradient, de façon à s'approcher progressivement, à chaque itération, de l'ensemble $\mathcal{F}^n$ permettant une minimisation satisfaisante de l'indicateur de validité $\epsilon_{|\mathcal{F}^n}^n$ . Aussi, l'objectif de cette étape est d'établir un ensemble $\mathcal{F}^n$ de vecteurs $F^n(r)$ visant à obtenir, suite à une réitération des étapes 110 à 140, un indicateur de validité $\epsilon^{n+1}_{|\mathcal{F}^{n+1}}$ plus faible que l'indicateur de validité $\epsilon^{n}_{|\mathcal{F}^{n}}$ de l'itération courante *n*.

Cette étape permet de mettre à jour au moins un terme $F^{n}_{w}(r)$ de chaque vecteur $F^n(r)$.

Pour cela, on définit, pour chaque position radiale, un gradient $G^{n}_{w}(r)$ de l'indicateur de validité $\epsilon^{n}_{|\mathcal{F}^{n}}$ à l'égard du paramètre optique correspondant au terme $F^{n}_{w}(r)$, de telle sorte que :

$$G^{n}_{w}(r) = \frac{\partial \epsilon^{n}_{|\mathcal{F}^{n}}}{\partial F^{n}_{w}(r)} \ (11)$$

Un algorithme de descente de gradient définit alors une direction $d^{n}_{w}$ ainsi qu'un pas d'avancement $\sigma^{n}_{w}$. Le terme $F_w(r)$ de chaque vecteur de paramètre est mis à jour selon l'expression :

$$F^{n+1}_{w}(r) = F^{n}_{w}(r) + d^{n}_{w}\,\sigma^{n}_{w} \ (12)$$

L'indicateur de validité $\epsilon^{n}_{|\mathcal{F}^{n}}$ est une variable scalaire. Cependant, il dépend de l'ensemble $\mathcal{F}^{n}$ des vecteurs paramètres sur la base desquels il a été établi, par l'intermédiaire de l'image $\hat{I}^{n}_{0}$ estimée lors de l'étape 120.

Le gradient $G^{n}_{w}(r)$ peut être défini pour chaque terme $F^{n}_{w}(r)$ des vecteurs $F^n(r)$ considérés lors de l'itération de rang *n*.

Selon un premier mode de réalisation, l'indicateur de validité ne prend en compte que le critère d'erreur : $\epsilon^{n}_{|\mathcal{F}^{n}} = \epsilon^{n}_{0|\mathcal{F}^{n}}$

Dans une variante, détaillée par la suite, l'indicateur de validité comporte également un critère morphologique, correspondant à la prise en compte de contraintes géométriques ou optiques de l'échantillon ou des particules formant l'échantillon.

Etape 150 : Mise à jour des paramètres de l'échantillon, formant les vecteurs $F^n(r)$ par minimisation de l'indicateur de validité $\epsilon^{n}_{|\mathcal{F}^{n}}$. Les paramètres sont mis à jour en appliquant l'expression (12).

Etape 160 : nouvelle itération des étapes 120 à 150, en prenant en compte, lors de l'étape 120 de l'itération suivante (*n*+1), l'ensemble $\mathcal{F}^{n}$ mis à jour lors de l'étape 150 de l'itération dernièrement effectuée.

Les étapes 120 à 160 sont itérées jusqu'à ce que la valeur de l'indicateur de validité $\epsilon^{n}_{|\mathcal{F}^{n}}$ soit considérée comme représentative d'une bonne description de l'échantillon par l'ensemble $\mathcal{F}^{n}$ de vecteurs $F^n(r)$. N désigne le rang de la dernière itération.

En prenant en compte un indicateur tel que défini dans les équations (10) et (13), les itérations cessent lorsque la valeur de l'indicateur de validité $\epsilon^{n}_{|\mathcal{F}^{n}}$ est suffisamment faible, ou lorsqu'un nombre prédéterminé d'itérations a été atteint, ou lorsque l'indicateur de validité n'évolue plus significativement entre deux itérations successives.

Suite à la dernière itération, on dispose, de paramètres $F^N(r)$ de l'échantillon. Cependant, lorsque des paramètres conditionnent la phase de l'onde lumineuse d'exposition 14, tel que la différence de trajet optique, une indétermination peut subsister, du fait de la périodicité précédemment décrite.

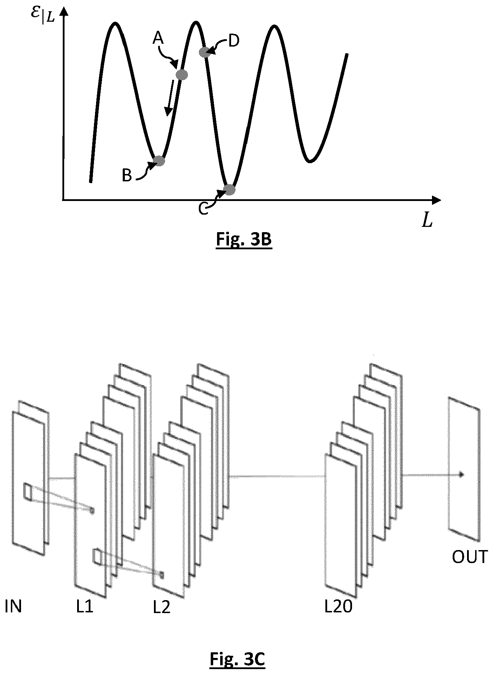

La figure 3B schématise une telle indétermination. Sur cette figure, on suppose que l'on ne considère qu'un seul paramètre *L,* correspondant à une différence de trajet optique. L'axe des ordonnées représente un indicateur $\varepsilon_{|L}$ en fonction de valeurs du paramètre *L* (axe des abscisses), cette valeur correspondant à une position radiale. Le point A correspond à une valeur du paramètre *L* estimée lors d'une première itération, suite à une prise en compte d'une image initiale. La mise en oeuvre d'un algorithme de type descente de gradient conduit vers une minimisation de l'indicateur $\varepsilon_{|L}$ en direction du point B, de dernier correspondant à un minimum local. Or, le graphe montre que la valeur minimale de l'indicateur $\varepsilon_{|L}$, qui correspond à la reconstruction optimale, est obtenue sur le point C. En partant du point A, le point C ne peut être atteint par un algorithme de minimisation de type descente de gradient. Il résulte de ce qui précède que la qualité de la reconstruction dépend de l'image initiale considérée. Lors de l'étape 110, on ne dispose d'aucun a priori sur l'échantillon. Aussi, même si les itérations des étapes 120 à 160 permettent d'obtenir une reconstruction de bonne qualité, l'atteinte d'une reconstruction optimale peut nécessiter une nouvelle initialisation, tenant compte d'un a priori sur l'échantillon. Une nouvelle initialisation peut permettre de démarrer l'algorithme de descente de gradient par un point D. Il devient alors possible d'atteindre le point C par descente de gradient. C'est l'objectif des étapes 170 à 180 décrites ci-après :

Etape 170 : Actualisation de tout ou partie des paramètres de l'échantillon par un algorithme d'intelligence artificielle à apprentissage supervisé.

A l'issue de l'étape 160, on dispose de vecteurs de paramètres $F^N(r)$ définis pour chaque position radiale *r,* et formant un jeu de paramètres $\mathcal{F}^{N}$. Certains termes de ces vecteurs, voire tous les termes de ces vecteurs, peuvent être utilisés en tant que données d'entrée d'un algorithme d'intelligence artificielle à apprentissage supervisé. Le jeu de paramètres $\mathcal{F}^N$ comporte $R$ vecteurs $F^N(r)$, chaque vecteur comportant $W$ termes $F_w^N(r)$. $R$ désigne le nombre de positions radiales considérées. A chaque position radiale $r$, certains de ces termes, voire tous les termes, peuvent former les données d'entrée de l'algorithme, comme décrit par la suite.

L'algorithme d'intelligence artificielle peut être un réseau de neurones, par exemple un réseau de neurones convolutif, usuellement décrit par l'acronyme CNN (Convolutive Neuron Network).

Dans cet exemple, le réseau de neurones comporte deux couches d'entrée IN. Chaque couche d'entrée représente une distribution spatiale (ou image) d'un paramètre $F_w^N$ décrivant l'échantillon, telle que mise à jour lors de la dernière itération des étapes 120 à 160 précédant l'étape 170. Dans cet exemple, la première couche d'entrée représente une distribution du premier paramètre $F_1^N(r)$, en l'occurence l'absorbance $\alpha^N(r)$, dans le plan de l'échantillon tandis que la deuxième couche d'entrée représente une distribution du deuxième paramètre $F_2^N(r)$, en l'occurence la différence de trajet optique $L^N(r)$, dans le plan de l'échantillon.

D'une façon générale, l'algorithme est mis en oeuvre à partir d'au moins une couche d'entrée IN, correspondant à une distribution spatiale d'un paramètre $F_w^N$ de rang $w$ dans le plan de l'échantillon, résultant de la dernière itération $n = N$ des étapes 120 à 160. Dans l'exemple considéré, on utilise, en guise de couches d'entrée, les deux distributions spatiales des paramètres $F_1^N$ et $F_2^N$ résultant de la dernière itération N des étapes 120 à 160.

Entre les couches d'entrée IN et la couche de sortie OUT, le réseau de neurones comporte 20 couches L1, L2...L20, dont les rangs sont compris entre 1 (couche adjacente de la couche IN) à 20 (couche adjacente de la couche OUT). Chaque couche comporte 20 plans. Une couche est obtenue par une convolution des 20 plans de la couche de rang précédent par un noyau de convolution de taille $3 \times 3$. La couche IN est considérée comme la couche de rang 0. Le réseau de neurones peut comporter une ou plusieurs couches de sortie OUT. Chaque couche de sortie représente une image d'un paramètre, dans le plan de l'échantillon. Dans cet exemple, le réseau de neurones ne comporte qu'une seule couche de sortie, correspondant à une image, dite image de sortie, du deuxième paramètre $F_2$, c'est-à-dire la différence de trajet optique $L$, dans le plan de l'échantillon. L'image de sortie comporte des paramètres, dits paramètres de sortie, actualisés par l'algorithme.

La figure 3C schématise une architecture d'un tel réseau.

De façon alternative, il est possible de recourir à d'autres architectures de réseaux de neurones, ou encore à des algorithmes d'intelligence artificielle à apprentissage supervisé, par exemple un algorithme de type SVM (Support Vector Machine).

Suite à l'étape 170, on dispose, pour chaque position radiale :

- de paramètres $F_w(r)$ non actualisés par l'algorithme : il s'agit, dans cet exemple, des paramètres de rang $w = 1$, en l'occurrence l'absorbance $\alpha(r)$ : ils correspondent aux paramètres résultant de la dernière itération des étapes 120 à 160.

- de paramètres $F_w^\circ(r)$ actualisés par l'algorithme CNN : il s'agit, dans cet exemple, des paramètres de rang w =2, en l'occurrence la différence de trajet optique $L(r)$

L'indice $^\circ$ représente le fait que les paramètres ont été actualisés par l'algorithme CNN.

Selon un mode de réalisation, l'algorithme permet une actualisation de l'ensemble des paramètres.

Dans cet exemple, l'étape 170 permet de constituer des vecteurs $F^\circ(r)$ formant un ensemble de paramètres $\mathcal{F}^\circ$ actualisés, au moins en partie, par le réseau de neurones convolutif.

Le réseau de neurones convolutif CNN a préalablement fait l'objet d'un apprentissage, sur la base de données d'apprentissage maîtrisées, comme décrit par la suite (cf. étape 90).

Etape 180 : Réitération des étapes 120 à 160 en prenant en compte les paramètres de sortie résultant de l'étape 170 pour former une image complexe d'initialisation. Au cours de cette étape, à partir des paramètres de l'échantillon résultant de l'étape 170, on met à jour l'image d'initialisation $A_{10}^{0,\circ}$. Selon cet exemple, l'image d'initialisation $A_{10}^{0,\circ}$ est établie, à partir des valeurs de $\alpha(r)$ et de $L^\circ(r)$, résultant de l'étape 170, selon l'expression (1).

Les itérations des étapes 120 à 160 sont alors réitérées. Durant la première étape 140 de la réitération, on utilise l'image d'initialisation $A_{10}^{0,\circ}$ résultant de l'étape 180. Suite aux itérations des étapes 120 à 160 :

- soit on considère qu'un recours à un réseau de neurones est nécessaire, auquel cas les étapes 170 et 180 sont renouvelées, et une nouvelle réitération des étapes 120 à 160 est effectuée, en utilisant l'image résultant de l'algorithme en tant qu'image d'initialisation ;

- soit on estime que les paramètres $\mathcal{F}^N$ résultant de la dernière étape 150 correspondent à une bonne représentation de l'échantillon, auquel cas on sort de l'algorithme, ce qui correspond à l'étape de sortie d'algorithme 190. Les paramètres considérés comme représentatifs de l'échantillon sont alors ceux correspondant à la dernière itération N des étapes 120 à 160 : il s'agit de l'ensemble $\mathcal{F}^N$ des vecteurs $F^N$ résultant de la dernière itération.

Etape 190 : sortie d'algorithme.

Au cours de cette étape, on forme une image d'un paramètre, ce qui correspond à une distribution spatiale du paramètre considéré. Cela permet d'avoir une représentation de l'échantillon. Au cours de cette étape, on peut former respectivement différentes images de différents paramètres. Dans l'exemple décrit, on peut former une image de de la différence de trajet optique et/ou une image de l'absorbance. Ces images peuvent permettre de caractériser l'échantillon.

Ainsi, d'une façon générale, le procédé comporte :

- une première série d'itérations des étapes 120 à 160, de façon à obtenir un ensemble $\mathcal{F}^N$ de vecteurs $F^N$ comportant les paramètres caractérisant l'échantillon ;
- suite aux premières réitérations des étapes 120 à 160, un recours à l'algorithme d'intelligence artificielle à apprentissage supervisé, et par exemple au réseau de neurones convolutif précédemment décrit, en utilisant tout ou partie des paramètres caractérisant l'échantillon (étape 170).
- une utilisation des paramètres de l'échantillon actualisés par l'algorithme d'intelligence artificielle à apprentissage supervisé, ces derniers étant utilisés en tant que paramètres d'initialisation pour une deuxième série d'itérations des étapes 120 à 160 (étape 180).
- suite à la deuxième série d'itérations des étapes 120 à 160, l'algorithme d'intelligence artificielle à apprentissage supervisé peut être à nouveau mise en oeuvre, préalablement à une troisième série itérations des étapes 120 à 160 etc...

Ainsi, on peut attribuer un rang $x$ à chaque série d'itérations des étapes 120 à 160. Lors de la première série d'itérations, $x = 1$. La série d'itérations de rang $x$ permet d'obtenir un ensemble de paramètres $\mathcal{F}^{N,x}$ . Tout ou partie des paramètres $\mathcal{F}^{N,x}$ peuvent être actualisés par l'algorithme d'intelligence artificielle, de façon à obtenir des paramètres actualisés $\mathcal{F}^{N,x,\circ}$ . Ces derniers forment des paramètres d'initialisation utilisés dans une série d'itérations de rang $x + 1$.

La dernière série d'itérations, de rang $X$, des étapes 120 à 160 permet d'obtenir des paramètres $\mathcal{F}^{N,X}$ , ces derniers permettant d'obtenir au moins une image d'un paramètre de l'échantillon (étape 190). L'image du paramètre de l'échantillon, ou chaque image du paramètre de l'échantillon, peut permettre une caractérisation de l'échantillon.

Le nombre $X$ de séries d'itérations des étapes 120 à 160 à effectuer peut être défini à priori, sur la base de calibrations à l'aide d'échantillons de calibration considérés comme comparables à l'échantillon analysé. Le nombre de séries d'itérations des étapes 120 à 160 peut aussi être établi au cas par cas, par exemple en comparant les paramètres résultant de deux séries différentes. Les étapes 170 et 180 sont répétées autant de fois que le nombre de séries d'itérations des étapes 120 à 160, moins 1.

Un aspect intéressant de l'invention est que les paramètres résultant du réseau de neurones sont utilisés non pas pour obtenir une représentation finale d'échantillon, mais pour effectuer une initialisation d'un algorithme de reconstruction holographique. Cela permet d'utiliser les performances liées au recours à l'intelligence artificielle, tout en prenant en compte les données mesurées.

L'algorithme de réseau de neurones convolutif mis en oeuvre dans l'étape 170 suppose une phase préalable d'apprentissage à l'aide d'échantillons connus, par exemple des échantillons numériques obtenus par simulations. Les échantillons d'apprentissage doivent de préférence être représentatifs des échantillons analysés par la suite. L'apprentissage fait l'objet de l'étape 90.

Etape 90 : apprentissage.

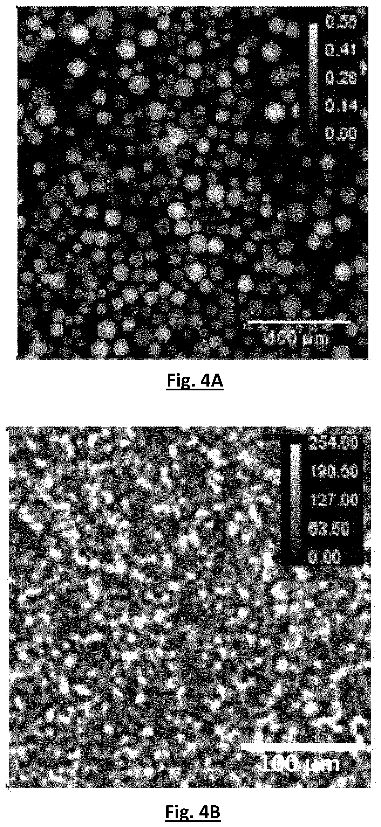

La figure 4A montre une partie d'un exemple d'échantillon numérique, obtenu en simulant des sphères. Les inventeurs ont simulé 4000 sphères s'étendant dans le champ d'observation du capteur d'image, c'est-à-dire selon environ 3 mm$^2$. Ces sphères sont considérées comme représentatives de cellules. Les rayons des sphères sont choisis aléatoirement entre 4 $\mu$m et 10 $\mu$m. Leur différence d'indice optique $L(r)$, par rapport au milieu dans lequel baignent les sphères, est choisi aléatoirement entre 0.01 et 0.05. La répartition des sphères est aléatoire. La simulation permet de simuler des sphères regroupées. L'apprentissage est également effectué en prenant en compte une distance, entre l'échantillon et le capteur d'image, correspondant de préférence à la distance considérée lors des essais sur des échantillons réels.

Les inventeurs ont simulé 1000 échantillons : ils ont ainsi établi des images d'absorbance et de différence de trajet optique sur les 1000 échantillons simulés. Chaque image s'étend sur 1000 x 1000 pixels. La figure 4A est un extrait d'une image de différence de trajet optique. L'échelle en niveaux de gris correspond à la valeur de la différence de trajet optique pour chaque pixel.

A partir de chaque image, représentant une distribution spatiale des paramètres de l'échantillon dans le plan de l'échantillon, on a simulé des images acquises par le capteur d'image, en mettant en oeuvre un modèle, tel que décrit en lien avec l'expression (5). La figure 4B correspond à une simulation d'image acquise par le capteur d'image (hologramme) à partir de la figure 4A. L'application du modèle suppose la prise en compte :

- d'une distance entre l'échantillon et le capteur d'image, en l'occurrence 1270 $\mu$m ;
- d'une bande spectrale d'illumination, en l'occurrence centrée sur 450 nm et de largeur spectrale égale à 15 nm ;
- d'un diamètre de la source de lumière, en l'occurrence 50 $\mu$m ;
- d'une distance entre l'échantillon et le capteur d'image, en l'occurrence 50 mm.

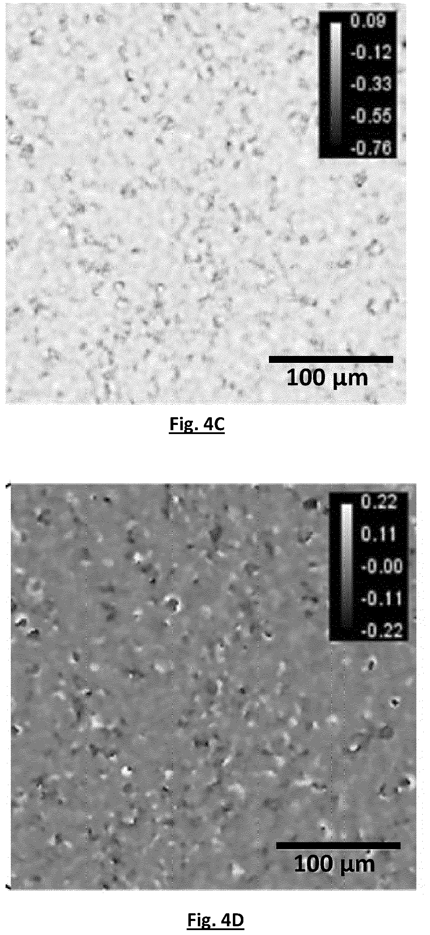

A partir de chaque simulation d'image acquise par le capteur d'image, on a mis en oeuvre un algorithme itératif de reconstruction, tel que décrit en lien avec les étapes 120 à 160, de façon à obtenir des images complexes d'échantillons d'apprentissage, dans le plan d'échantillon. A partir des images complexes reconstruites, on a obtenu une image de chaque paramètre dans le plan de l'échantillon. Les figures 4C et 4D sont respectivement des images de l'absorbance $\alpha(r)$ et de la différence de trajet optique $L(r)$ résultant d'une mise en oeuvre de l'algorithme itératif de reconstruction à partir de la figure 4B.

En considérant les 1000 échantillons numériques simulés et, pour chaque échantillon simulé; une image reconstruite de l'absorbance et une image reconstruite de la différence de trajet optique, on a obtenu un total de 2000 images reconstruites, telles que celles représentées sur les figures 4C et 4D. A partir de ces images, on a extrait de manière aléatoire :

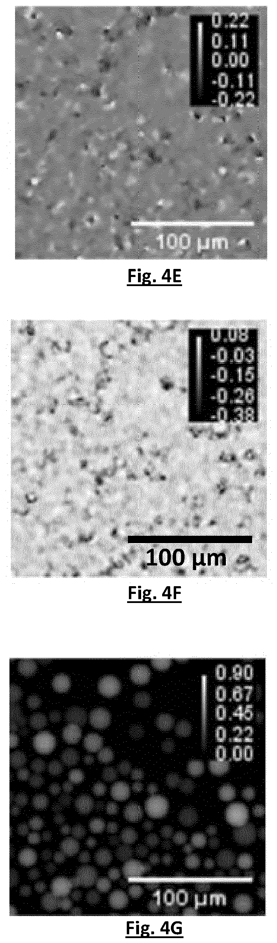

- 10000 vignettes de dimensions 121x121 représentant l'absorbance, dont un exemple est donné sur la figure 4E : il s'agit d'absorbances estimées par les itérations des étapes 120 à 160.
- 10000 vignettes de dimensions 121×121 représentant le trajet optique, dont un exemple est donné sur la figure 4F. il s'agit de différences de trajet optique estimées par les itérations des étapes 120 à 160.

Ces vignettes ont été utilisées en tant que données d'entrée d'apprentissage du réseau de neurones convolutif.

A partir des paramètres simulés, tels que représentés sur la figure 4A, on a extrait 10000 vignettes, de dimension 121x121, correspondant aux vraies différences de trajet optiques, ces vignettes étant utilisées en tant que données de sortie d'apprentissage du réseau de neurones. Un exemple est donné sur la figure 4G.

Les figures 4E, 4F et 4G correspondent à une même partie d'un échantillon numérique. Elles forment un jeu d'apprentissage (2 entrées, 1 sortie). 10000 jeux d'apprentissage, tels que représentés sur les figures 4E à 4G, ont été formés. Les jeux d'apprentissage ont été utilisés pour paramétrer le réseau de neurones convolutif tel que décrit en lien avec la figure 3C.

Variante

Selon une variante, l'indicateur de validité comporte également un critère morphologique, correspondant à la prise en compte de contraintes géométriques ou optiques de l'échantillon ou des particules formant l'échantillon. l'indicateur de validité $\epsilon^n_{|\mathcal{F}^n}$ prend également en compte un critère morphologique $\epsilon^n_{10|\mathcal{F}^n}$. A la différence du critère d'erreur $\epsilon^n_{0|\mathcal{F}^n}$, qui est défini à partir de données mesurées ou estimées dans le plan de détection $P_0$, le critère morphologique $\epsilon^n_{10|\mathcal{F}^n}$ est défini dans le plan de l'échantillon $P_{10}$.

D'une façon générale, le critère morphologique $\epsilon^n_{10|\mathcal{F}^n}$ dépend de la valeur des termes des vecteurs de paramètres déterminés lors de l'étape 110 ou lors de l'étape 150 d'une itération précédente, ou de leurs dérivées spatiales. Il est représentatif de la morphologie de l'échantillon, telle que déterminée à partir des vecteurs de paramètres. Autrement dit, le critère morphologique représente un critère d'attache à des données morphologiques de l'échantillon, ces dernières pouvant être définies par des hypothèses.

Le critère morphologique $\epsilon^n_{10|\mathcal{F}^n}$ peut prendre en compte une dérivée spatiale de la différence de trajet optique, de façon à prendre en compte une forme prédéfinie d'une particule. Par exemple, lorsque l'échantillon comporte des cellules adhérentes, la forme prédéfinie peut être un hémisphère, un tel cas de figure étant représenté sur la figure 2. Lorsque l'échantillon comporte des cellules flottantes, la forme prédéfinie peut être une sphère lorsque les cellules sont sphériques.

Par exemple, si l'amplitude complexe de l'onde lumineuse d'exposition 14 est définie selon l'expression (1), chaque vecteur de paramètre comporte un terme $L^n(r)$ un exemple de critère morphologique est :

$$\epsilon^n_{10|\mathcal{F}^n} = \int dr \sqrt{\left(\frac{\partial L^n(r)}{\partial x}\right)^2 + \left(\frac{\partial L^n(r)}{\partial y}\right)^2} \quad (11)$$

Ce critère tend à diminuer lorsque la grandeur $L^n(r)$ ne présente un minimum d'oscillations, ce qui est par exemple le cas lorsque les particules ont une morphologie sphérique ou hémisphérique de particules. Les valeurs de $L^n(r)$ pour lesquelles le critère est minimal correspondent donc à des particules, par exemple sphériques ou hémisphériques, isolées les unes des autres, avec un minimum d'oscillation de $L^n(r)$ entre les particules ou sur ces dernières.

Le critère morphologique $\epsilon_{10|\mathcal{F}^n}^n$ est minimal lorsque les vecteurs de paramètres $F^n(r)$ formant l'ensemble $\mathcal{F}^n$ décrivent des objets répondant à des hypothèses morphologiques établies à priori.

Lorsque l'indicateur de validité $\epsilon_{|\mathcal{F}^n}$ inclut une prise en compte du critère morphologique $\epsilon_{10|\mathcal{F}^n}^n$, il peut être défini sous la forme d'une somme pondérée du critère d'erreur $\epsilon_{0|\mathcal{F}^n}^n$ et du critère morphologique $\epsilon_{10|\mathcal{F}^n}^n$. L'expression de l'indicateur de validité peut alors être, par exemple :

$$\epsilon_{|\mathcal{F}^n}^n = \epsilon_{0|\mathcal{F}^n}^n + \gamma\epsilon_{10|\mathcal{F}^n}^n \quad (12)$$

où y est un scalaire positif.

Mise en oeuvre du procédé sur des données réelles.

Le procédé décrit en lien avec les étapes 100 à 190 a été mis en oeuvre en utilisant un échantillon comportant cellules flottantes de type cellules ovariennes de hamster (CHO, acronyme de Chinese Hamster Ovary). Les cellules baignaient dans un milieu de culture, dans une chambre fluidique d'épaisseur 20 μm.

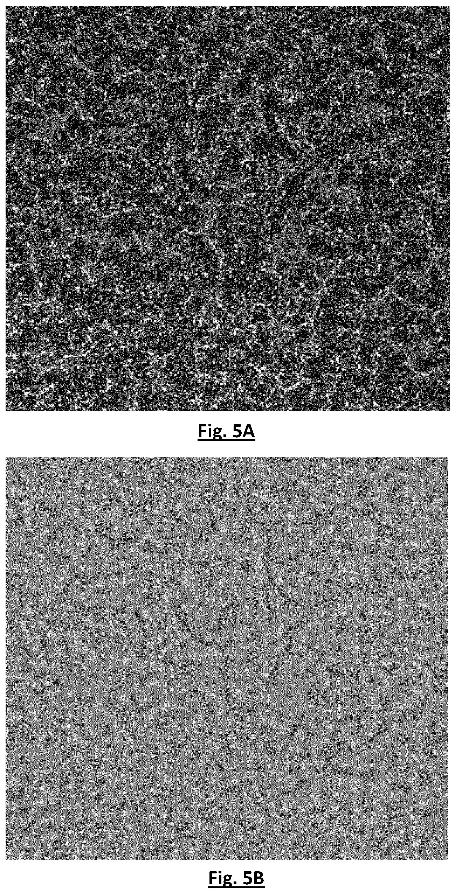

La source de lumière était une diode électroluminescente dont la bande spectrale d'émission était centrée sur 450 nm, et filtrée par un diaphragme de 50 μm. Le capteur d'image était un capteur monochrome comportant 3240 x 2748 pixels de côté 1.67 μm. La figure 5A montre un hologramme obtenu, c'est-à-dire une image acquise par le capteur d'image. La figure 5B montre une image du deuxième paramètre $L(r)$ résultant de plusieurs itérations des étapes 120 à 160. Ces itérations permettent de définir une image des paramètres $\alpha(r)$ et L(r).

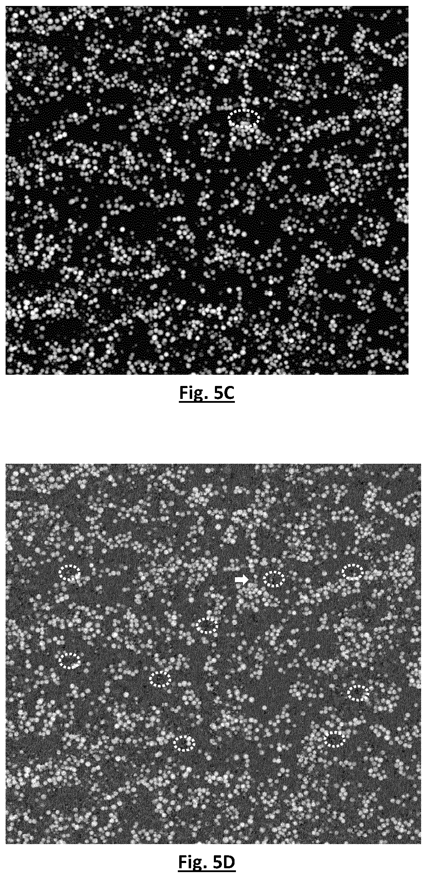

La figure 5C montre une image obtenue en appliquant un réseau de neurones à partir des images des paramètres $\alpha(r)$ et $L(r)$. La figure 5C montre une image de sortie du réseau de neurones, correspondant à une image du paramètre $L°(r)$. La comparaison entre les figures 5B et 5C montre que le réseau de neurones effectue des ajustements très significatifs, certains d'entre eux étant entourés par un cercle en pointillés. On a constaté que les ajustements les plus significatifs sont réalisés suite aux premières itérations des étapes 120 à 160. On constate par exemple que des pixels sombres de la figure 5B apparaissent sous la forme de pixels clairs sur la figure 5C.

L'image $L°(r)$ de la figure 5C ainsi que l'image du paramètre $\alpha(r)$ ont été utilisées pour établir une image complexe d'initialisation $A_{10}^{0,°}$, selon l'expression (1). En se basant sur cette image d'initialisation, les étapes de reconstruction itérative, décrite en lien avec les étapes 120 à 160, ont été réitérées.

La figure 5D montre une image du paramètre $L(r)$ à la suite d'une réitération des étapes 120 à 160. On observe des modifications par rapport à l'image du paramètre $L°(r)$ représentée sur la figure 5C, issue de la mise en oeuvre du réseau de neurones : la reconstruction permet d'identifier des objets non détectés sur les images précédentes (tirets en pointillés). Elle permet également de retirer certains objets détectés par le réseau de neurones, ces derniers étant repérés (flèches blanches). Le fait d'appliquer une deuxième reconstruction itérative, sur la base de l'image de la figure 5C, permet d'affiner la précision avec laquelle l'image du paramètre $L(r)$ est établie.

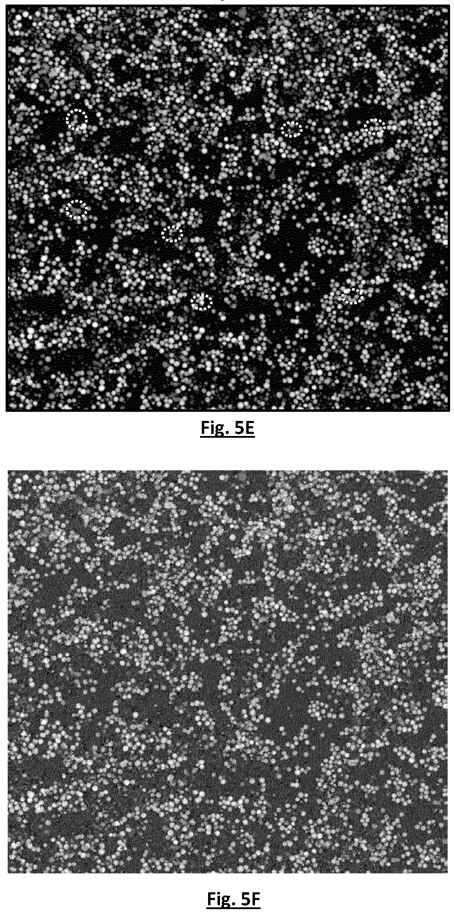

La réitération des étapes 120 à 160 a permis de définir des deuxièmes images des paramètres $\alpha(r)$ et $L(r)$. Ces images ont été utilisées en tant qu'images d'entrée du réseau de neurones convolutif. La figure 5E montre l'image de sortie du réseau de neurones $L°(r)$, représentant une actualisation de l'image du paramètre $L(r)$. Les nouveaux objets, issus de la reconstruction itérative, sont confirmés sur cette image (traits en pointillés). L'image du paramètre $L°(r)$ de la figure 5E ainsi que l'image du paramètre $\alpha(r)$ ont été utilisées pour établir une image complexe d'initialisation $A_{10}^{0,°}$, selon l'expression (1). En se basant sur cette image d'initialisation, les étapes de reconstruction itérative, décrite en lien avec les étapes 120 à 160, ont été réitérées une nouvelle fois. La figure 5F montre une image du paramètre $L(r)$ à la suite de cette nouvelle réitération des étapes 120 à 160.

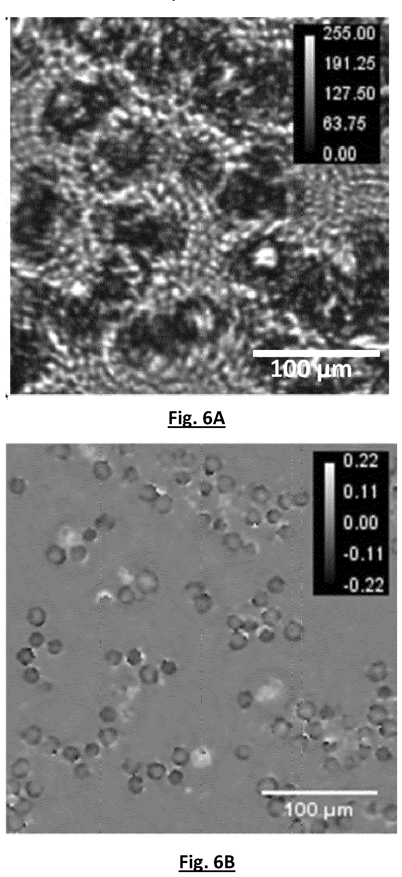

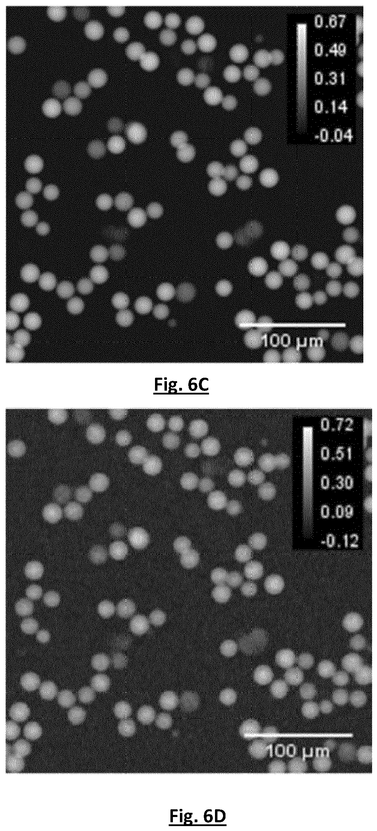

Les figures 6A à 6D représentent une deuxième série d'essais sur des cellules flottantes de type CHO (Chinese Hamster Ovary), selon une densité différente que lors de l'essai décrit en lien avec les étapes 5A à 5F. La figure 6A montre une partie d'une image acquise par le capteur d'image. La figure 6B représente une image de la différence de trajet optique $L(r)$ estimée après des premières itérations des étapes 120 à 160. On observe des repliements de phases, qui correspondent à des niveaux de gris sombres au niveau de certaines cellules. Les images de l'absorbance et de la différence de chemin optique, résultant de la dernière itération des étapes 120 à 160, ont été utilisées en tant qu'images d'entrée du réseau de neurone convolutif (étape 170). L'image de la figure 6C correspond à une image de la différence de trajet optique résultant du réseau de neurones : en comparant les figures 6B et 6C, on peut observer que le phénomène de repliement de phase a été corrigé par le réseau de neurones. L'image de l'absorbance, résultant des étapes 120 à 160, ainsi que l'image de la différence de trajet optique représentée sur la figure 6C ont été utilisées pour former une image complexe d'initialisation. Cette dernière a été utilisée dans une nouvelle mise en oeuvre des étapes 120 à 160. La figure 6D montre une image de la différence de trajet optique résultant de cette nouvelle itération.

Au cours d'une troisième série d'essais, on a utilisé un échantillon comportant des cellules adhérentes de type PC12 dans un milieu de culture. Un autre réseau de neurones a été utilisé, dont la phase d'apprentissage était basée sur des modélisations d'échantillons comportant des cellules adhérentes.

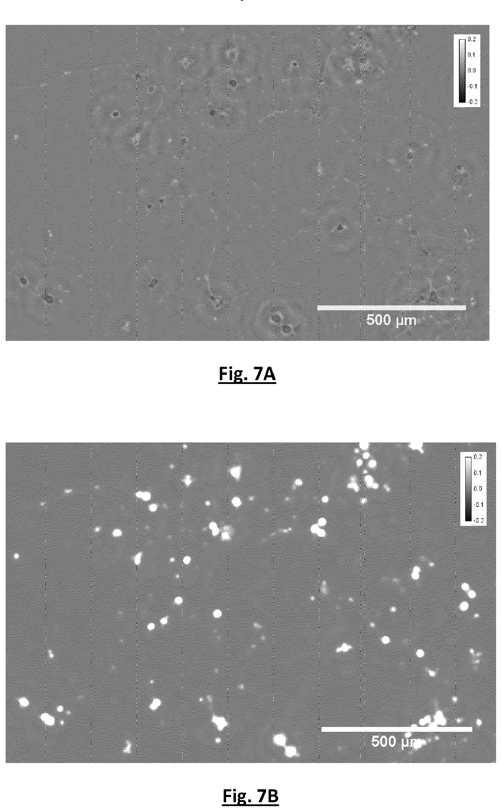

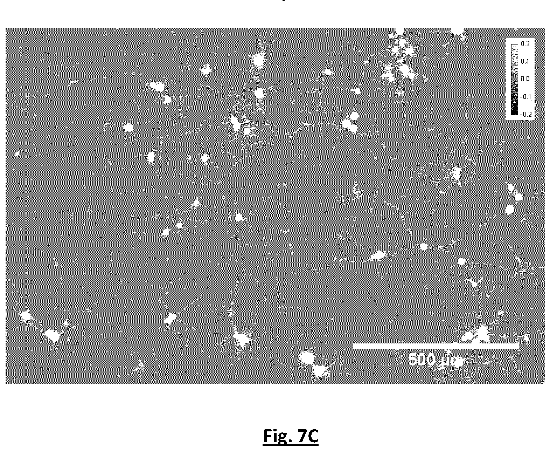

La source utilisée était une LED émettant dans une bande spectrale centrée sur 605 nm, et de largeur spectrale égale à 20 nm. L'échantillon était disposé à une distance de 3500 $\mu$m. La figure 7A montre une image de la différence de chemin optique $L(r)$ obtenue suite à des premières itérations d'étapes 120 à 160. Les premiers paramètre $\alpha(r)$ et les deuxièmes paramètres $L(r)$ résultant obtenus suite aux premières itérations des étapes 120 à 160 ont été utilisés en tant que données d'entrée du réseau de neurones convolutif. La figure 7B représente l'image de sortie du deuxième paramètre $L°(r)$, telle que fournie par le réseau de neurones. La comparaison des images 7A et 7B permet d'apprécier l'effet du réseau de neurones convolutif. Les deuxièmes paramètres actualisés ont été utilisés pour former une image complexe d'initialisation, cette dernière ayant été utilisée pour une deuxième mise en oeuvre des étapes 120 à 160. La figure 7C montre l'image résultant de la reconstruction. Cette image montre une évolution spatiale plus continue du paramètre $L(r)$ sans les discontinuités, apparaissant sur la figure 7A, représentatives du phénomène de repliement de phase.

Le procédé décrit ci-avant peut permettre de caractériser l'échantillon, à partir des paramètres déterminés suite à l'étape 180. Par caractériser, il est notamment entendu, à titre non exhaustif:

- l'obtention d'une image de l'échantillon permettant une observation de ce dernier ;
- une détermination d'un nombre de particules composant l'échantillon ;
- une classification de particules en classes de particules ;
- un dénombrement de particules ;
- une identification de particules par rapport à des paramètres d'identification ;
- un dénombrement de particules identifiées ;
- une estimation de caractéristiques géométriques ou optiques de l'échantillon ;
- une estimation de caractéristiques géométriques de particules composant l'échantillon;
- une détermination de la viabilité de particules composant l'échantillon ;
- une estimation d'une teneur en masse sèche dans l'échantillon, et par exemple d'une ou de plusieurs particules de l'échantillon.

L'invention pourra être mise en oeuvre, sur des échantillons biologiques, dans le domaine de la santé, par exemple dans l'aide au diagnostic, ou dans l'étude de processus biologiques. Elle peut également être mise en oeuvre par des échantillons prélevés dans l'environnement, ou dans des installations industrielles, par exemple dans le domaine de l'agroalimentaire.

## Revendications

1. Procédé d'observation d'un échantillon (10), l'échantillon s'étendant selon un plan d'échantillon ($P_{10}$) définissant des positions radiales, des paramètres (($L(r)$, $\alpha(r)$,$F_w(r)$) de l'échantillon étant définis à chaque position radiale ($r$), le procédé comportant :

   a) illumination de l'échantillon à l'aide d'une source de lumière (11), configurée pour émettre une onde lumineuse incidente (12) se propageant vers l'échantillon ;
   b) acquisition, à l'aide d'un capteur d'image (20), d'une image ($I_0$) de l'échantillon (10), formée dans un plan de détection ($P_0$), l'échantillon étant disposé entre la source de lumière (11) et le capteur d'image (20), l'image acquise par le capteur d'image formant un hologramme de l'échantillon ;
   c) à partir de l'image acquise par le capteur d'image, obtention d'une image de l'échantillon dans le plan de l'échantillon, l'image de l'échantillon dans le plan de l'échantillon correspondant à une distribution d'au moins un paramètre de l'échantillon dans le plan d'échantillon ;

   le procédé étant **caractérisé en ce que** l'étape c) comporte les étapes suivantes:

   (i) prise en compte d'une image d'initialisation ( $A_{10}^0$ ), dans le plan de l'échantillon ;
   (ii) application d'un opérateur de propagation holographique (h) à l'image d'initialisation, ou à une image complexe de l'échantillon résultant de l'étape (v) d'une itération précédente, de façon à estimer l'image acquise par le capteur d'image ( $\hat{I}_0^n$ ) dans le plan de détection ;
   (iii) comparaison de l'image ($I_0$) acquise lors de l'étape b) et de l'image estimée lors de l'étape ii) ( $\hat{I}_0^n$ );
   (iv) en fonction de la comparaison, calcul d'un indicateur de validité ( $\epsilon_{|\mathcal{F}^n}^n$ ), et mise à jour des paramètres décrivant l'échantillon ($F^n(r)$, $\alpha^n(r)$,$L^n(r)$) de telle sorte que les paramètres de l'échantillon sont mis à jour de façon à faire tendre l'indicateur de validité vers une valeur prédéterminée ou en minimisant l'indicateur de validité,
   (v) tant qu'un critère de convergence ou qu'un nombre prédéterminé d'itérations n'a pas été atteint, mise à jour d'une image complexe de l'échantillon ( $A_{10}^n$ ), dans le plan de l'échantillon ($P_{10}$), à partir des paramètres mis à jour lors de l'étape iv), puis réitération des étapes (ii) à (v) ;

(vi) utilisation de paramètres de l'échantillon, mis à jour lors de la dernière étape (iv) effectuée, pour alimenter un algorithme d'intelligence artificielle à apprentissage supervisé, de façon à actualiser des paramètres de l'échantillon ($F°(r)$, $L°(r)$);

(vii) utilisation des paramètres résultant de l'étape (vi) pour mettre à jour l'image d'initialisation ( $A_{10}^{0°}$ );

(viii) réitération, au moins une fois, des étapes (ii) à (v), en utilisant, lors de la première réitération, l'image d'initialisation ( $A_{10}^{0°}$ ) mise à jour lors de l'étape (vii);

(ix) obtention d'une image de l'échantillon dans le plan de l'échantillon à partir des paramètres mis à jour lors l'étape iv) de la dernière itération des étapes (ii) à (v).

2. Procédé selon l'une quelconque des revendications précédentes, dans lequel l'algorithme d'intelligence artificielle à apprentissage supervisé met en oeuvre un réseau de neurones.

3. Procédé selon la revendication 2, dans lequel le réseau de neurones est un réseau de neurones convolutif.

4. Procédé selon l'une quelconque des revendications précédentes, dans lequel l'étape iv) comporte une détermination d'un gradient (GW(r)) de l'indicateur de validité ( $\epsilon_{|\mathcal{F}^n}^n$ ) en fonction d'au moins un paramètre ( $F_w^n(r)$ ), de telle sorte que les paramètres ($F^{n+1}(r)$) sont mis à jour pour réduire l'indicateur de validité de l'itération suivante ( $\epsilon_{|\mathcal{F}^{n+1}}^{n.+1}$ ).

5. Procédé selon la revendication 4, dans lequel l'étape iv) met en oeuvre un algorithme de type descente de gradient.

6. Procédé selon l'une quelconque des revendications précédentes, dans lequel :

- l'étape iv) résulte en la détermination d'une image de chaque paramètre dans le plan de l'échantillon ;
- lors de l'étape vi), au moins une image d'un paramètre forme une couche d'entrée de l'algorithme d'intelligence artificielle à apprentissage supervisé ;

- lors de l'étape viii), l'algorithme d'intelligence artificielle à apprentissage supervisé délivre une image de sortie, correspondant à une image d'un paramètre de l'échantillon actualisé par l'algorithme.

7. Procédé selon l'une quelconque des revendications précédentes, dans lequel lors de l'étape (ii), l'estimation de l'image de l'échantillon ( $\hat{I}_0^n$ ) dans le plan de détection ($P_0$) comporte l'application d'un produit de convolution par un noyau de convolution ($K$), le noyau de convolution représentant une étendue spatiale de la source de lumière.

8. Procédé selon l'une quelconque des revendications précédentes, dans lequel les paramètres décrivant l'échantillon comportent :

- un premier paramètre ($L(r)$) représentant une absorbance de l'échantillon ;
- un deuxième paramètre ($\alpha(r)$), représentant une différence de trajet optique, selon l'axe de propagation (Z) de l'onde lumineuse incidente.

9. Procédé selon la revendication 8, dans lequel lors de l'étape (vi), l'algorithme d'intelligence artificielle à apprentissage supervisé est alimenté par :

- une image du premier paramètre, correspondant à une distribution spatiale du premier paramètre, mise à jour lors de la dernière itération des étapes (ii) à (v) précédent l'étape (vi);
- une image du deuxième paramètre, correspondant à une distribution spatiale du deuxième paramètre, mise à jour lors de la dernière itération des étapes (ii) à (v) précédent l'étape (vi) ;

et dans lequel l'algorithme d'intelligence artificielle à apprentissage supervisé permet d'obtenir une image du deuxième paramètre actualisé.

10. Procédé selon l'une quelconque des revendications précédentes, dans lequel suite à une étape (viii), les étapes (vi) à (viii) sont renouvelées au moins une fois.

11. Procédé selon l'une quelconque des revendications précédentes, dans lequel aucune optique de formation d'image n'est disposée entre l'échantillon et le capteur d'image.

12. Procédé selon l'une quelconque des revendications 1 à 10 dans lequel un système optique, de type lentille ou objectif, est disposé entre l'échantillon et le capteur d'image, le système optique définissant un plan image ($P_i$) et un plan objet ($P_0$), le procédé étant tel que lors de l'étape b) :

- le plan objet (P$_0$) est décalé du plan d'échantillon (P$_{10}$) selon une distance de défocalisation objet ;
- et/ou le plan image (P$_i$) est décalé du plan de détection (P$_0$) selon une distance de défocalisation image.

13. Dispositif d'observation d'un échantillon (10) comportant :

- une source de lumière (11), configurée pour émettre une onde lumineuse incidente pour illuminer l'échantillon ;
- un support d'échantillon (10s), configuré pour recevoir l'échantillon ;
- un capteur d'image (20), configuré pour acquérir une image de l'échantillon lorsque l'échantillon est disposé sur le support d'échantillon (10s) ;
- un processeur (30), programmé pour exécuter des instructions permettant de mettre en oeuvre les étapes i) à viii) d'un procédé selon l'une quelconque des revendications précédentes à partir d'une image acquise par le capteur d'image.

**Patentansprüche**

1. Verfahren zur Beobachtung einer Probe (10), wobei die Probe sich gemäß einer Probenebene (P$_{10}$) erstreckt, die radiale Positionen definiert, wobei Parameter ((L(r), $\alpha$(r), F$_w$(r)) der Probe in jeder radialen Position (r) definiert sind, wobei das Verfahren aufweist:

a) Beleuchtung der Probe mit Hilfe einer Lichtquelle (11), die konfiguriert ist, eine einfallende Lichtwelle (12) zu emittieren, die sich zur Probe hin ausbreitet;

b) Erfassung, mit Hilfe eines Bildsensors (20), eines Bilds (I$_0$) der Probe (10), das in einer Erkennungsebene (P$_0$) geformt wird, wobei die Probe zwischen der Lichtquelle (11) und dem Bildsensor (20) angeordnet ist, wobei das vom Bildsensor erfasste Bild ein Hologramm der Probe formt;

c) ausgehend von dem vom Bildsensor erfassten Bild, Erhalt eines Bilds der Probe in der Ebene der Probe, wobei das Bild der Probe in der Ebene der Probe einer Verteilung mindestens eines Parameters der Probe in der Probenebene entspricht;

wobei das Verfahren **dadurch gekennzeichnet ist, dass** der Schritt c) die folgenden Schritte aufweist:

(i) Berücksichtigung eines Initialisierungsbilds (

$A_{10}^0$ ) in der Ebene der Probe;

(ii) Anwendung eines holographischen Ausbreitungsoperators (h) auf das Initialisierungsbild, oder auf ein komplexes Bild der Probe, das aus dem Schritt (v) einer vorhergehenden Wiederholung hervorgeht, um das vom Bildsensor in der Erkennungsebene erfasste Bild ( $\hat{I}_0^n$ ) zu schätzen;

(iii) Vergleich des im Schritt b) erfassten Bilds (I$_0$) und des im Schritt ii) geschätzten Bilds ( $\hat{I}_0^n$ );

(iv) abhängig von dem Vergleich, Berechnung eines Gültigkeitsindikators ( $\in_{|\mathcal{F}^n}^n$ ) und Aktualisierung der die Probe beschreibenden Parameter (F$^n$(r), $\alpha^n$(r), L$^n$(r)) derart, dass die Parameter der Probe so aktualisiert werden, dass der Gültigkeitsindikator zu einem vorbestimmten Wert tendiert oder indem der Gültigkeitsindikator minimiert wird,

(v) so lange kein Konvergenzkriterium oder keine vorbestimmte Anzahl von Wiederholungen erreicht wurde, Aktualisierung eines komplexen Bilds ( $A_{10}^n$ ) der Probe in der Ebene der Probe (P$_{10}$), ausgehend von den im Schritt iv) aktualisierten Parametern, dann Wiederholung der Schritte (ii) bis (v);

(vi) Verwendung von Parametern der Probe, die im letzten ausgeführten Schritt (iv) aktualisiert wurden, um einen Algorithmus künstlicher Intelligenz mit überwachtem Lernen zu versorgen, um Parameter (F°(r), L°(r)) der Probe zu aktualisieren;

(vii) Verwendung der aus dem Schritt (iv) hervorgehenden Parameter, um das Initialisierungsbild ( $A_{10}^{0°}$ ) zu aktualisieren;

(viii) Wiederholung, mindestens einmal, der Schritte (ii) bis (v), indem bei der ersten Wiederholung das im Schritt (vii) aktualisierte Initialisierungsbild ( $A_{10}^{0°}$ ) verwendet wird;

(ix) Erhalt eines Bilds der Probe in der Ebene der Probe ausgehend von den im Schritt iv) der letzten Wiederholung der Schritte (ii) bis (v) aktualisierten Parametern.

2. Verfahren nach einem der vorhergehenden Ansprüche, wobei der Algorithmus künstlicher Intelligenz mit überwachtem Lernen ein neuronales Netzwerk verwendet.

3. Verfahren nach Anspruch 2, wobei das neuronale Netzwerk ein gefaltetes neuronales Netzwerk ist.

**4.** Verfahren nach einem der vorhergehenden Ansprüche, wobei der Schritt iv) eine Bestimmung eines Gradienten (Gw(r)) des Gültigkeitsindikators ( $\in_{|\mathcal{F}^n}^n$ ) abhängig von mindestens einem Parameter ( $F_w^n(r)$ ) aufweist, so dass die Parameter (F^{n+1}(r)) aktualisiert werden, um den Gültigkeitsindikator der folgenden Wiederholung ( $\in_{|\mathcal{F}^{n+1}}^{n+1}$ ) zu reduzieren.

**5.** Verfahren nach Anspruch 4, wobei der Schritt iv) einen Algorithmus des Typs Gradientenabstieg verwendet.

**6.** Verfahren nach einem der vorhergehenden Ansprüche, wobei:

- der Schritt iv) die Bestimmung eines Bilds jedes Parameters in der Ebene der Probe ergibt;
- im Schritt vi) mindestens ein Bild eines Parameters eine Eingangsschicht des Algorithmus künstlicher Intelligenz mit überwachtem Lernen formt;
- im Schritt viii) der Algorithmus künstlicher Intelligenz mit überwachtem Lernen ein Ausgangsbild liefert, das einem Bild eines durch den Algorithmus aktualisierten Parameters der Probe entspricht.

**7.** Verfahren nach einem der vorhergehenden Ansprüche, wobei im Schritt (ii) die Schätzung des Bilds ( $\hat{I}_0^n$ ) der Probe in der Erkennungsebene (P_0) die Anwendung eines Faltungsprodukts durch einen Faltungskern (K) aufweist, wobei der Faltungskern eine räumliche Ausdehnung der Lichtquelle darstellt.

**8.** Verfahren nach einem der vorhergehenden Ansprüche, wobei die die Probe beschreibenden Parameter aufweisen:

- einen ersten Parameter (L(r)), der eine Absorbanz der Probe darstellt;
- einen zweiten Parameter ($\alpha(r)$), der eine Lichtwegdifferenz gemäß der Ausbreitungsachse (Z) der einfallenden Lichtwelle darstellt.

**9.** Verfahren nach Anspruch 8, wobei im Schritt (vi) der Algorithmus künstlicher Intelligenz mit überwachtem Lernen versorgt wird mit:

- einem Bild des ersten Parameters, entsprechend einer räumlichen Verteilung des ersten Parameters, aktualisiert bei der letzten Wiederholung der Schritte (ii) bis (v) vor dem Schritt (vi);
- einem Bild des zweiten Parameters, entsprechend einer räumlichen Verteilung des zweiten Parameters, aktualisiert bei der letzten Wiederholung der Schritte (ii) bis (v) vor dem Schritt (vi);

und wobei der Algorithmus künstlicher Intelligenz mit überwachtem Lernen es ermöglicht, ein Bild des aktualisierten zweiten Parameters zu erhalten.

**10.** Verfahren nach einem der vorhergehenden Ansprüche, wobei nach einem Schritt (viii) die Schritte (vi) bis (viii) mindestens einmal wiederholt werden.

**11.** Verfahren nach einem der vorhergehenden Ansprüche, wobei keine Bilderzeugungsoptik zwischen der Probe und dem Bildsensor angeordnet ist.

**12.** Verfahren nach einem der Ansprüche 1 bis 10, wobei ein optisches System der Art Linse oder Objektiv zwischen der Probe und dem Bildsensor angeordnet ist, wobei das optische System eine Bildebene (Pi) und eine Objektebene (Po) definiert, wobei das Verfahren derart ist, dass im Schritt b):

- die Objektebene (Po) zur Probenebene (P_{10}) gemäß einem Objekt-Defokussierungsabstand versetzt ist;
- und/oder die Bildebene (Pi) zur Erkennungsebene (P_0) gemäß einem Bild-Defokussierungsabstand versetzt ist.

**13.** Vorrichtung zur Beobachtung einer Probe (10), die aufweist:

- eine Lichtquelle (11), die konfiguriert ist, eine einfallende Lichtwelle zu emittieren, um die Probe zu beleuchten;
- einen Probenträger (10s), der konfiguriert ist, die Probe aufzunehmen;
- einen Bildsensor (20), der konfiguriert ist, ein Bild der Probe zu erfassen, wenn die Probe auf dem Probenträger (10s) angeordnet ist;
- einen Prozessor (30), der programmiert, ist, Anweisungen auszuführen, die es ermöglichen, die Schritte i) bis viii) eines Verfahrens nach einem der vorhergehenden Ansprüche ausgehend von einem vom Bildsensor erfassten Bild durchzuführen.

**Claims**

**1.** Method for observing a sample (10), the sample lying in a sample plane ($P_{10}$) defining radial positions, parameters (L(r), $\alpha(r)$, $F_w(r)$) of the sample being defined at each radial position (r), the method comprising:

a) illuminating the sample using a light source (11) configured to emit an incident light wave (12) that propagates toward the sample;

b) acquiring, using an image sensor (20), an image ($I_0$) of the sample (10), said image being formed in a detection plane ($P_0$), the sample being placed between the light source (11) and the image sensor (20), the image acquired by the image sensor forming a hologram of the sample;

c) from the image acquired by the image sensor, obtaining an image of the sample in the sample plane, the image of the sample in the sample plane corresponding to a distribution of at least one parameter of the sample in the sample plane;

the method being **characterized in that** step c) comprises the following steps:

(i) taking into account an initialization image ( $A_{10}^0$ ), in the sample plane;

(ii) applying a holographic propagation operator (h) to the initialization image, or to a complex image of the sample resulting from step (v) of a preceding iteration, so as to estimate an estimate ( $\hat{I}_0^n$ ) of the image acquired by the image sensor in the detection plane;

(iii) comparing the image ($I_0$) acquired in step b) and the image ( $\hat{I}_0^n$ ) estimated in step ii);

(iv) depending on the comparison, computing a validity indicator ( $\epsilon_{|\mathcal{F}^n}^n$ ), and updating the parameters ($F^n(r)$, $\alpha^n(r)$, $L^n(r)$) describing the sample, such that the parameters of the sample are updated to make the validity indicator tend toward a preset value or to minimize the validity indicator;

(v) provided that a convergence criterion has not been met or a preset number of iterations has not been reached, updating a complex image ( $A_{10}^n$ ) of the sample, in the sample plane ($P_{10}$), using the parameters updated in step iv), then reiterating steps (ii) to (v);

(vi) using the updated sample parameters of the last step (iv) performed to feed a supervised machine learning algorithm, so as to update parameters ($F°(r)$, $L°(r)$) of the sample;

(vii) using parameters resulting from step (vi) to obtain an update ( $A_{10}^{0°}$ ) of the initialization image;

(viii) reiterating, at least once, steps (ii) to (v), using, during the first reiteration, the updated initialization image ( $A_{10}^{0°}$ ) resulting from step (vii);

(ix) obtaining an image of the sample in the sample plane from the updated parameters of step iv) of the last iteration of steps (ii) to (v).

2. Method according to any one of the preceding claims, wherein the supervised machine learning algorithm employs a neural network.

3. Method according to Claim 2, wherein the neural network is a convolutional neural network.

4. Method according to any one of the preceding claims, wherein step iv) comprises determining a gradient ( $G_w^n(r)$ ) of the validity indicator ( $\epsilon_{|\mathcal{F}^n}^n$ ) as a function of at least one parameter ( $F_w^n(r)$ ), such that the parameters ( $F^{n+1}(r)$ ) are updated to decrease the validity indicator ( $\epsilon_{|\mathcal{F}^{n+1}}^{n+1}$ ) of the following iteration.

5. Method according to Claim 4, wherein step iv) employs a gradient descent algorithm.

6. Method according to any one of the preceding claims, wherein:

- step iv) results in the determination of an image of each parameter in the plane of the sample;
- in step vi), at least one image of a parameter forms an input layer of the supervised machine learning algorithm;
- in step viii), the supervised machine learning algorithm delivers an output image, corresponding to an image of a parameter of the sample updated by the algorithm.

7. Method according to any one of the preceding claims, wherein, in step (ii), estimation of the estimate ( $\hat{I}_0^n$ ) of the image of the sample in the detection plane ($P_0$) comprises convolution with a convolution kernel ($K$), the convolution kernel representing a spatial extent of the light source.

8. Method according to any one of the preceding claims, wherein the parameters describing the sample comprise:

- a first parameter ($L(r)$) representing an absorbance of the sample;
- a second parameter ($\alpha(r)$), representing an optical path difference, along the propagation axis (Z) of the incident light wave.

9. Method according to Claim 8, wherein, in step (vi), the supervised machine learning algorithm is fed with:

- an image of the first parameter, corresponding to a spatial distribution of the first parameter, as updated in the last iteration of steps (ii) to (v) preceding step (vi);
- an image of the second parameter, corresponding to a spatial distribution of the second parameter, as updated in the last iteration of steps (ii) to (v) preceding step (vi);

and wherein the supervised machine learning algorithm allows an image of the updated second parameter to be obtained.

10. Method according to any one of the preceding claims, wherein, following a step (viii), steps (vi) to (viii) are repeated at least once.

11. Method according to any one of the preceding claims, wherein no image-forming optics are placed between the sample and the image sensor.

12. Method according to any one of Claims 1 to 10, wherein an optical system, such as a lens or objective, is placed between the sample and the image sensor, the optical system defining an image plane ($P_i$) and an object plane ($P_0$), the method being such that, in step b):

- the object plane ($P_0$) is offset from the sample plane ($P_{10}$) by an object defocus distance;
- and/or the image plane ($P_i$) is offset from the detection plane ($P_0$) by an image defocus distance.

13. Device for observing a sample (10), comprising:

- a light source (11), configured to emit an incident light wave in order to illuminate the sample;
- a sample holder (10s), configured to receive the sample;
- an image sensor (20), configured to acquire an image of the sample when the sample is placed on the sample holder (10s);
- a processor (30), programmed to execute instructions allowing steps i) to viii) of a method according to any one of the preceding claims to be implemented on the basis of an image acquired by the image sensor.

1

11
17
18

Y
Z    X
12

D

P₁₀          10       10ₚ 10ₚ10ₚ  10ₘ
                                        e
10s                                    10s
           d                14
P₀          20

                            32

                    30      31

**Fig. 1A**

1'

11

Y
Z    X

D

P₁₀     16    10ₚ 10ₚ10ₚ  10ₘ
    10
Pₒ                                    δ
10s                14        10s
                                        15
P₀         20
                                        Pᵢ

                            32

                    30      31

**Fig. 1B**

Fig. 2

**Fig. 3A**

**Fig. 3B**

IN    L1    L2    L20    OUT

**Fig. 3C**

**Fig. 4A**

**Fig. 4B**

**Fig. 4C**

**Fig. 4D**

**Fig. 4E**

**Fig. 4F**

**Fig. 4G**

Fig. 5A

Fig. 5B

**Fig. 5C**

**Fig. 5D**

**Fig. 5E**

**Fig. 5F**

**Fig. 6A**

**Fig. 6B**

Fig. 6C

Fig. 6D

**Fig. 7A**

**Fig. 7B**

**Fig. 7C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- WO 2016189257 A
- WO 2017162985 A

- WO 2018060589 A1
- FR 1859618

**Littérature non-brevet citée dans la description**

- **TOMOYOSHI SHIMOBABA et al.** Convolutional neural network-based régression for depth prédiction in digital holography. Cornell University Library, 02 Février 2018
- **AARON YEVICK et al.** Machine-learning approach to holographie particle characterization. *Optics Express,* vol. 22 (22), 26884

- **YICHEN WU et al.** Extended depth-of-field in holographie image reconstruction using deep learning based auto-focusing and phase-recovery. Cornell University Library, 21 Mars 2018